# EUROPEAN PATENT APPLICATION

(11) **EP 3 486 553 A1**
(43) Date of publication of application: **22.05.2019**
(21) Application number: 17382784.1
(22) Date of filing: 20.11.2017
(51) Int. Cl.: F21S 41/19, F21S 43/19, F21S 45/00, B60Q 1/00

(54) **AUTOMOTIVE LIGHTING DEVICE AND METHOD FOR MANUFACTURING AN AUTOMOTIVE LIGHTING DEVICE**

(71) Applicant: Valeo Iluminacion, 23600 Martos (ES)
(72) Inventor: TEBA, Daniel, 23600 MARTOS (ES); RUBIA, Juan-Antonio, 23600 MARTOS (ES)

(57) **Abstract**

The invention is related to a lighting device (1) for an automotive vehicle. This lighting device (1) comprises a housing (2) with a main connector (3), a secondary connector (4) in electric connection with the main connector (3) and a lighting module (5) comprising a module connector (6). The secondary connector (4) is fixed to the housing (2) and comprises a first coupler (41). The lighting module (5) is coupled to the secondary connector (4) and the module connector (6) comprises a second coupler (61) adapted to cooperate with the first coupler (41). The housing (2) comprises a first assembler (21) and the lighting module (5) comprises a second assembler (51) adapted to cooperate with the first assembler (21) in assembling the lighting module (5) into the housing (2).

## Description

### TECHNICAL FIELD

This invention is related to the field of the manufacturing of automotive lighting devices, and more specifically to the positioning of lighting modules on a lighting device housing.

### STATE OF THE ART

Vehicles lighting devices requires an increasing number of electric connections to perform new functions, providing a safer and advanced performance.

A harness of wires is used to make information and electric supply reach each one of the light sources of the lighting device. This harness is distributed in different bundles throughout the housing, because lighting modules must be located in specific positions to fulfil strict lighting regulations.

Each one of these wires bundles end with an electrical connector, which is plugged into the lighting module. However, these wires bundles are loose and, since the assembly of the lighting devices is made with reduced visibility and accessibility, the final layout of these bundles after connecting the lighting module is uncertain. This may be dangerous and impact the correct operation of the lighting device.

Further, current lighting modules sometimes request freedom to rotate or pivot at the user's request, so these connections cannot be excessively tight.

### DESCRIPTION OF THE INVENTION

The invention provides a solution for this problem by means of a lighting device according to claim 1 and a method for manufacturing a lighting device according to claim 7. Preferred embodiments of the invention are defined in dependent claims.

In an inventive aspect, the invention provides a housing for an automotive lighting device, the housing comprising
a housing inner wall and a main connector;
a first assembler; and
a secondary connector in electric connection with the main connector, the secondary connector being fixed to the housing and comprising a first coupler.

This housing for an automotive lighting device, due to the fact that the secondary connector is fixed to the inner wall, provides a way of avoid entangling of cables and achieving a reliable electrical connection between the lighting module and the secondary connector.

In some particular embodiments, the secondary connector comprises a guide for mechanically guidance of a connector towards the secondary connector.

This guide prepares the way for a connector in its approach to the secondary connector.

In some particular embodiments, the secondary connector comprises an insulating displacement connection.

This kind of connection is easy and reliable, and as the secondary connector is fixed to the housing, there is no possibility that the electrical connection fails due to a displacement of this secondary connector.

In a further inventive aspect, the invention provides a lighting module for an automotive lighting device, the lighting module comprising a module connector intended to be coupled to a secondary connector, the module connector comprising a second coupler, and wherein the lighting module comprises a second assembler adapted to cooperate in assembling the lighting module into a housing of the automotive lighting device.

This lighting module is particularly advantageous, since it may be assembled to a connector which is fixed in a housing. This lighting module is therefore interrelated with an automotive lighting housing, being suitable for both mechanically and electrically connected to it.

In some particular embodiments, the module connector is adapted to be separated a predetermined distance from the lighting module keeping the electrical connection with the lighting module.

This module connector provides the lighting module with the ability of being regulated.

In some particular embodiments, the module connector is in electric connection with the lighting module by a surplus of conductive track.

This surplus of conductive track allows the module connector to be in different relative positions with respect to the lighting module but keeping the electrical connection with it, therefore allowing the regulation of the lighting module without losing the electric connection between the lighting module and the main connector.

In some particular embodiments, the module connector comprises an insulating displacement connection.

This kind of connection is easy and reliable.

In some particular embodiments, the module connector comprises a guide for mechanically guidance of the module connector towards another connector.

This is a better way of preparing the module connector to be connected to another connector, in such a way that when the guide is near the corresponding connector, a simple movement in the approaching direction may be enough to achieve a mechanic connection.

In another inventive aspect, the invention provides an automotive lighting device comprising a housing according to the first inventive aspect and a lighting module according to the previous inventive aspect.

Such an automotive lighting device takes advantage of the synergism between the housing according to the first inventive aspect and the lighting module according to the previous inventive aspect.

In some particular embodiments, the first coupler is adapted to cooperate with the second coupler.

This cooperation is intended to ensure mechanical connection between the secondary connector and the module connector.

In some particular embodiments, the cooperation between the first coupler and the second coupler comprises clipping or snap-fit junction.

This is a better way of achieving a reliable electrical connection between the lighting module and the secondary connector.

In some particular embodiments, the first assembler is adapted to cooperate with the second assembler.

This cooperation is intended to ensure mechanical connection between the housing and the module connector.

In a further inventive aspect, the invention provides a method for manufacturing the lighting device of one of the previous inventive aspects, the method comprising the steps of
providing a housing with a housing inner wall, a main connector and a first assembler;
providing a secondary connector in electric connection with the main connector, the secondary connector being fixed to the housing and comprising a first coupler;
providing a lighting module comprising a second assembler and a module connector, the module connector comprising a second coupler adapted to cooperate with the first coupler and the second assembler being adapted to cooperate with the first assembler in assembling the lighting module into the housing;
placing the secondary connector in contact with the module connector, in such a way that the module connector has a single degree of freedom in the direction of coupling with the secondary connector; and
assembling the first assembler with the second assembler, so that the module connector couples with the secondary connector.

A lighting device manufactured by this method prevent conductive tracks from becoming entangled or trapped by the connection between the module and the secondary connector, further achieving a reliable electrical connection between these two elements.

In some particular embodiments, the step of placing the secondary connector in contact with the module connector in such a way that the module connector has a single degree of freedom in the direction of coupling with the secondary connector is achieved by providing a guide in the secondary connector or in the module connector, so that the guide only allows this single degree of freedom in the direction of coupling with the secondary connector.

This method represents a better way of preparing the module connector to be connected to the secondary connector, in such a way that a simple movement in the approaching direction is enough to achieve a mechanic connection.

In some particular embodiments, the first assembler or the second assembler comprises a ball joint.

This is a suitable way of achieving a reliable electrical connection between the lighting module and the secondary connector, allowing the regulation of the lighting module with respect to the housing.

In some particular embodiments, the first assembler and the second assembler comprise threaded portions to be assembled by screws.

This is a suitable way of achieving a reliable electrical connection between the lighting module and the secondary connector.

In some particular embodiments, the step of providing a lighting module is made by means of a tapered element, so that the lighting module is guided by the tapered element towards a predetermined location with a single degree of freedom in the direction of being assembled to the housing.

This method drastically reduces the influence of human errors in the manufacturing of the lighting module.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1a to 1d show different steps of a method of manufacturing a lighting device according to the invention.
Figure 2 shows a lighting device manufactured by a method according to the invention.
Figures 3a to 3c show different steps of an alternative method of manufacturing a lighting device according to the invention.
Figure 4 shows an automotive vehicle with a lighting device manufactured by a method according to the invention.

### DETAILED DESCRIPTION OF THE INVENTION

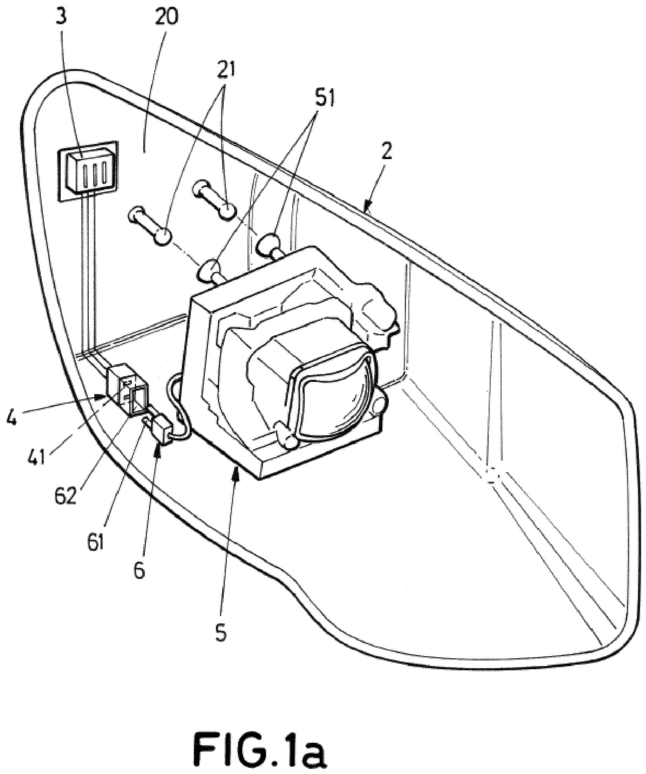

Figures 1a to 1d show different steps of a method of manufacturing a lighting device according to the invention.

Figure 1a shows the step of providing a housing 2 with a housing inner wall 20, a main connector 3 and a first assembler 21. The housing 2 is part of an automotive headlamp, the main connector 3 is the standard connector which connects the whole headlamp to the electric systems of the vehicle. The first assembler 21 is in turn in charge of the position regulation of the lighting module which is to be installed in this lighting device. A secondary connector 4 is further provided in electric connection with the main connector 3. This secondary connector 4 is fixed to the housing inner wall 20 and comprises a first coupler 41. The secondary connector 4 is linked with the main connector 3 by means of conductive tracks which are embedded in the housing inner wall 20. A lighting module 5 comprising a second assembler 51 and a module connector 6 is also provided. The second assembler 51 is adapted to cooperate with the first assembler 21 in assembling the lighting module 5 into the housing 2. The module connector 6 further comprises a second coupler 61 adapted to cooperate with the first coupler 41 in coupling the module connector 6 to the secondary connector 4. In this particular embodiment, the cooperation between the first coupler 41 and the second coupler 61 comprises a clipping function, although other methods, like a snap-fit junction are also valid for this invention.

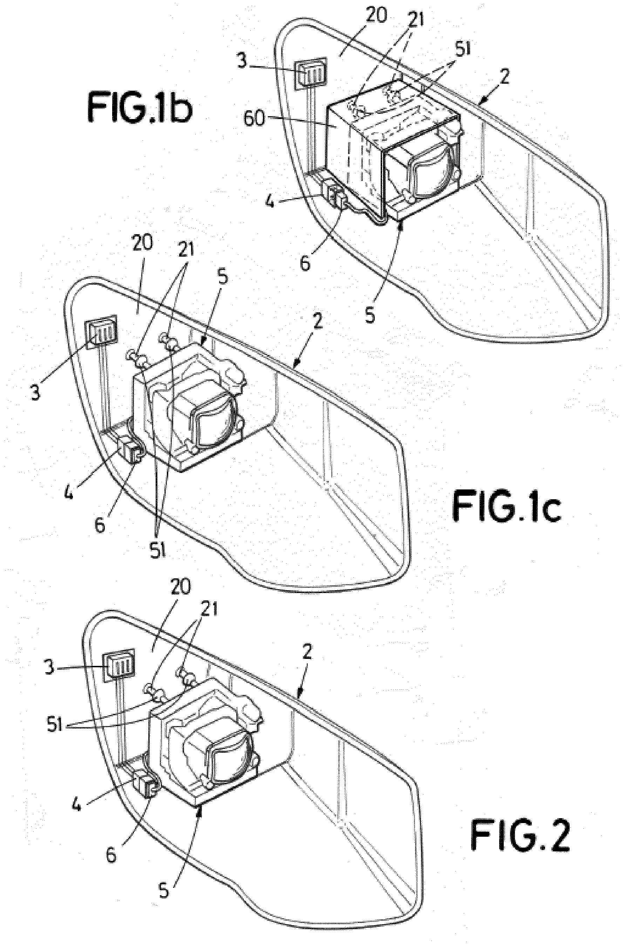

Figure 1b shows the lighting module 5 being guided by a tapered element 60 in its approaching to the housing 2. The lighting module 5 is guided by the tapered element 60 towards the connecting location with a single degree of freedom in the direction of being assembled to the housing 2. This step comprises the controlled approaching of the lighting module 5, guided by the tapered element 60, so it rests on a position with a single degree of freedom in the direction of being assembled to the housing 2.

In this step, the secondary connector 4 is placed in contact with the module connector 6, in such a way that the module connector 6 has a single degree of freedom in the direction of coupling with the secondary connector 4. This is achieved by providing a guide in the secondary connector or in the module connector, so that the guide only allows this single degree of freedom in the direction of coupling with the secondary connector. In the embodiment shown in this figure, a simple rectangular case 62 is enough to cause this effect.

In Figure 1c, the first assembler 21 is assembled with the second assembler 51, so that the module connector 6 couples with the secondary connector 4. At the same time, the second coupler is coupled to the first coupler in the same assembling movement, since while the second assembler 51 is pressed against the first assembler 21, the module connector 6 is pressed against the secondary connector 4.

In this embodiment, the first assembler 21 comprises a ball joint so that a correct position regulation may be carried out during the operation of the lighting module 5.

Figure 2 shows the lighting device 1 which results of this method. This lighting device 1 comprises
a housing 2 with a housing inner wall 20 and a main connector 3;
a secondary connector 4 in electric connection with the main connector 3, the secondary connector 4 being fixed to the housing inner wall 20;
a lighting module 5 comprising a module connector 6 coupled to the secondary connector 4; and
wherein the housing 2 comprises a first assembler 21 and the lighting module 5 comprises a second assembler 51 cooperating with the first assembler 21 in assembling the lighting module 5 into the housing 2.

The secondary connector 4 comprises a first coupler and the module connector 6 comprises a second coupler adapted to cooperate with the first coupler, although these first and second couplers are not visible in this figure, due to the fact that they are already coupled.

The module connector 6 is adapted to be separated a predetermined distance from the lighting module 5 keeping the electrical connection with the lighting module 5, by means of a surplus of conductive track, which allows the module connector 6 to be in different relative positions with respect to the lighting module 5 but keeping the electrical connection with it.

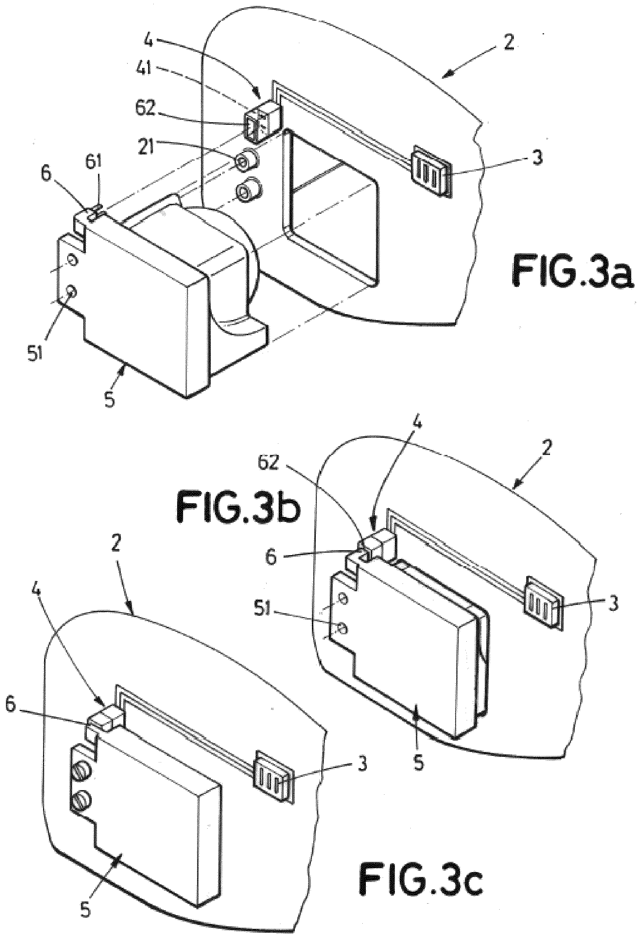

Figures 3a to 3c show different steps of an alternative method of manufacturing a lighting device according to the invention.

The difference resides in that in this case, the secondary connector 4 is located in a different location of the housing 2, and in that the first assembler 21 and the second assembler 51 comprise threaded portions to be assembled by screws.

Figure 3a shows the step of providing a housing 2 with a main connector 3 and a first assembler 21. The housing 2 is part of an automotive headlamp, the main connector 3 is the standard connector which connects the whole headlamp to the electric systems of the vehicle. The housing 2 also comprises a secondary connector 4 in electric connection with the main connector 3. This secondary connector 4 is fixed to the housing 2 and comprises a first coupler 41. The secondary connector 4 is linked with the main connector 3 by means of conductive tracks. A lighting module 5 comprising a second assembler 51 and a module connector 6 is provided. The second assembler 51 is adapted to cooperate with the first assembler 21 in assembling the lighting module 5 into the housing 2. The module connector 6 further comprises a second coupler 61 adapted to cooperate with the first coupler 41 in coupling the module connector 6 to the secondary connector 4.

Figure 3b shows the controlled approaching of the lighting module 5, so it rests on a position with a single degree of freedom in the direction of being assembled to the housing 2. In this step, the secondary connector 4 is placed in contact with the module connector 6, in such a way that the module connector 6 has a single degree of freedom in the direction of coupling with the secondary connector 4. This is achieved by providing a guide in the secondary connector or in the module connector, so that the guide only allows this single degree of freedom in the direction of coupling with the secondary connector. In the embodiment shown in this figure, a simple rectangular case 62 is enough to cause this effect.

In Figure 3c, the first assembler is assembled with the second assembler by screws which go through both threaded portions, so that the module connector 6 couples with the secondary connector 4. At the same time, the second coupler is coupled to the first coupler in the same assembling movement, since while the second assembler is screwed against the first assembler, the module connector 6 is pressed against the secondary connector 4.

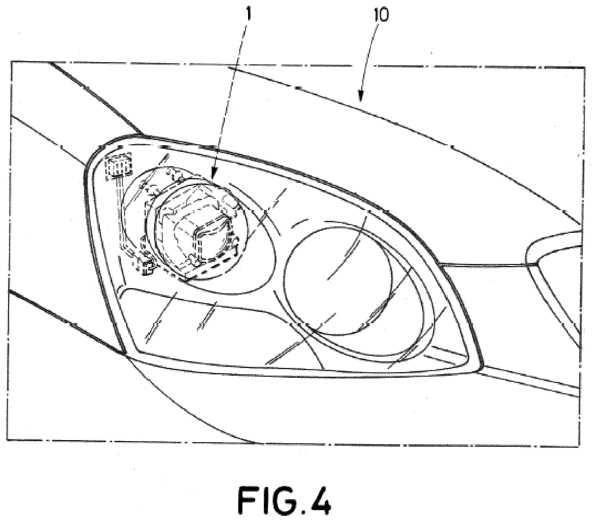

Figure 4 shows an automotive vehicle 10 with a lighting device 1 according to the invention.

## Claims

1. A housing (2) for an automotive lighting device (1), the housing (2) comprising
a housing inner wall (20) and a main connector (3);
a first assembler (21); and
a secondary connector (4) in electric connection with the main connector (3), the secondary connector (4) being fixed to the housing (2) and comprising a first coupler (41).

2. Housing (2) for an automotive lighting device (1), wherein the secondary connector (4) comprises a guide (62) for mechanically guidance of a connector towards the secondary connector (4).

3. Housing (2) according to any of the preceding claims, wherein the secondary connector (4) comprises an insulating displacement connection.

4. A lighting module (5) for an automotive lighting device (1), the lighting module (5) comprising a module connector (6) intended to be coupled to a secondary connector (4), the module connector (6) comprising a second coupler (61), and wherein the lighting module (5) comprises a second assembler (51) adapted to cooperate in assembling the lighting module (5) into a housing (2) of the automotive lighting device (1).

5. Lighting module (5) according to claim 4, wherein the module connector (6) is adapted to be separated a predetermined distance from the lighting module (5) keeping the electrical connection with the lighting module (5).

6. Lighting module (5) according to claim 5, wherein the module connector (6) is in electric connection with the lighting module (5) by a surplus of conductive track.

7. Lighting module (5) according to any of claims 3 to 6, wherein the module connector comprises an insulating displacement connection.

8. Lighting module (5) according to any of claims 3 to 7, wherein the module connector (6) comprises a guide (62) for mechanically guidance of the module connector (6) towards another connector.

9. Automotive lighting device (1) comprising
a housing (2) according to any of claims 1 to 3; and
a lighting module (5) according to any of claims 4 to 8.

10. Automotive lighting device (1) according to claim 9, wherein the first coupler (41) is adapted to cooperate with the second coupler (61).

11. Automotive lighting device (1) according to claim 10, wherein the cooperation between the first coupler (41) and the second coupler (61) comprises clipping or snap-fit junction.

12. Automotive lighting device (1) according to any of claims 9 to 11, wherein the first assembler (21) is adapted to cooperate with the second assembler (51).

13. Method for manufacturing the lighting device (1) of any of the preceding claims, the method comprising the steps of
providing a housing (2) with a housing inner wall (20), a main connector (3) and a first assembler (21);
providing a secondary connector (4) in electric connection with the main connector (3), the secondary connector (4) being fixed to the housing (2) and comprising a first coupler (41);
providing a lighting module (5) comprising a second assembler (51) and a module connector (6), the module connector (6) comprising a second coupler (61) adapted to cooperate with the first coupler (41) and the second assembler (51) being adapted to cooperate with the first assembler (21) in assembling the lighting module (5) into the housing (2);
placing the secondary connector (4) in contact with the module connector (6), in such a way that the module connector (6) has a single degree of freedom in the direction of coupling with the secondary connector (4); and
assembling the first assembler (21) with the second assembler (51), so that the module connector (6) couples with the secondary connector (4).

14. Method according to claim 13, wherein the step of placing the secondary connector (4) in contact with the module connector (6) in such a way that the module connector (6) has a single degree of freedom in the direction of coupling with the secondary connector (4) is achieved by providing a guide (62) in the secondary connector or in the module connector (6), so that the guide (62) only allows this single degree of freedom in the direction of coupling with the secondary connector (6).

15. Method according to any of claims 13 or 14, wherein the first assembler (21) or the second assembler (51) comprises a ball joint.

16. Method according to any of claims 13 or 14, wherein the first assembler (21) and the second assembler (51) comprise threaded portions to be assembled by screws.

17. Method according to any of claims 13 to 16, wherein the step of providing a lighting module (5) is made by means of a tapered element (60), so that the lighting module (6) is guided by the tapered element (60) towards a predetermined location with a single degree of freedom in the direction of being assembled to the housing (2).
